# EUROPÄISCHE PATENTANMELDUNG

(11) **EP 2 495 858 A1**
(43) Veröffentlichungstag der Anmeldung: **05.09.2012**
(21) Anmeldenummer: 11156405.0
(22) Anmeldetag: 01.03.2011
(51) Int. Cl.: H02M 3/335, H02M 3/337

(54) **Bidirektionaler Gleichspannungswandler**

(71) Anmelder: Rheinisch-Westfälisch-Technische Hochschule Aachen, 52056 Aachen (DE)
(72) Erfinder: Thomas, Stephan, 52062, Aachen (DE); De Doncker, Rik W. A. A., B-3000, Leuven (BE); Lenke, Robert, 52070, Aachen (DE)
(74) Vertreter: Jostarndt, Hans-Dieter

(57) **Zusammenfassung**

Die Erfindung stellt einen möglichst einfachen und verlustarmen bidirektionalen Gleichspannungswandler für hohe Spannungen zur Verfügung. Der bidirektionale Gleichspannungswandler (1) umfasst eine Eingangsstufe (2) zur Umwandlung einer DC-Eingangsspannung in eine erste AC-Spannung, einen Transformator (3) zur Transformierung der ersten AC-Spannung in eine zweite AC-Spannung und eine Ausgangsstufe (4) zur Umwandlung der zweiten AC-Spannung in eine DC-Ausgangsspannung, wobei mindestens eine der Eingangsstufen (2) und/oder Ausgangsstufen (4) zur Bereitstellung der ersten und/oder zweiten AC-Spannung einen Zweig eines Multilevel-Umrichters (5) mit einer ersten Anzahl an aktiven ersten Halbleiterschaltern (61) umfasst.

## Beschreibung

### Technisches Gebiet der Erfindung

Die Erfindung bezieht sich auf bidirektionale Gleichspannungswandler für hohe Spannungen.

### Stand der Technik

Ein Gleichspannungswandler, auch DC-DC-Wandler genannt, bezeichnet eine elektrische Schaltung, welche eine am Eingang zugeführte Gleichspannung in eine Gleichspannung mit höherem, niedrigerem oder invertiertem Spannungsniveau umwandelt. Die Umsetzung erfolgt mit Hilfe eines periodisch arbeitenden elektronischen Schalters und einem oder mehrerer Energiespeicher. Im Bereich der elektrischen Energietechnik werden diese Wandler auch als Gleichstromsteller bezeichnet.

Die zur Zwischenspeicherung der Energie benutzte Induktivität (induktiver Wandler) besteht aus einer Spule oder einem Wandler-Transformator. Im Gegensatz dazu werden Wandler mit kapazitiver Speicherung (kapazitive Wandler) als Ladungspumpen bezeichnet. Ladungspumpen werden eingesetzt, wenn entweder - wie in integrierten Schaltungen - keine Induktivitäten vorhanden sind, oder wenn so wenig Ausgangsleistung erforderlich ist, dass sich der Einsatz der teuren Spulen gegenüber den billigen Kondensatoren nicht lohnt.

Gleichspannungswandler finden sich als ein Teil in Schaltnetzteilen, mit denen Verbraucher wie beispielsweise PC-Netzteile, Notebooks, Mobiltelefone, Kleinmotoren, HiFi-Geräte betrieben werden. Die Vorteile gegenüber Linearnetzteilen liegen im besseren Wirkungsgrad und geringerer Wärmeentwicklung. Bei einem linearen Spannungsregler oder einem Vorwiderstand hingegen wird die überflüssige Spannung einfach "verheizt". DC-DC-Wandler werden auch als vollständig gekapselte Wandlermodule angeboten, welche teilweise für die direkte Bestückung auf Leiterplatten vorgesehen sind. Die Ausgangsspannung kann je nach Bauart kleiner, gleich oder größer als die Eingangsspannung sein. Am bekanntesten sind die Baugruppen, welche eine Kleinspannung auf eine galvanisch getrennte Kleinspannung übersetzen. Die gekapselten DC-DC-Wandler werden beispielsweise für Isolationsspannungen von 1,5 kV bis über 3 kV angeboten und dienen der Stromversorgung kleiner Verbraucher in Gleichspannungsnetzen wie z.B. an 24 V in Industrieanlagen oder an 48 V in der Telekommunikation oder im Bereich elektronischer Baugruppen beispielsweise 5 Volt für Digitalschaltungen oder ±15 Volt für den Betrieb von Operationsverstärkern. Gleichspannungswandler werden nach verschiedenen Kriterien klassifiziert und in verschiedene Topologien (Art des Aufbaus eines verzweigten Netzes an Stromwegen) eingeteilt.

Im Gegensatz zu unidirektionalen Wandlern ist es bei bidirektionalen Gleichspannungswandlern unerheblich, welcher Anschluss als Eingang und welcher Anschluss aus Ausgang definiert wird. Eine bidirektionale Energieflussrichtung erlaubt sowohl einen Leistungsfluss vom definierten Eingang zum Ausgang hin als auch umgekehrt.

US 5027264 beschreibt einen bidirektionalen Gleichspannungswandler für hohe Spannungen, bei dem das Funktionsprinzip auf einer "Dual Active Bridge (DAB)"-Topologie beruht. Hier wird die DC-Eingangspannung in einem Eingangswandler zu einer AC-Spannung umgewandelt und damit ein Transformator gespeist. Der Ausgang des Transformators ist mit einem Ausgangswandler verbunden, der die AC-Spannung wieder in eine DC-Ausgangsspannung für eine Last umwandelt. Ein solcher bidirektionaler DAB-Gleichspannungswandler benutzt den Nulldurchgang einer Halbbrücke, um die Schaltverluste zu vermindern. Ferner kann die Schaltfrequenz erhöht werden. Diese DC/DC-Wandler können in einphasigen oder mehrphasigen Konfigurationen implementiert werden, wobei eine Ausgangsspannung bereitgestellt wird, die zumindest nahe der gewünschten Lastspannung gehalten werden kann. Allerdings benötigt die bisherige DAB-Topologie eine Serienschaltung von leistungselektronischen Halbleiterschaltern, da bei hohen Zwischenkreisspannungen die Sperrspannung der Halbleiterschalter nicht ausreicht. Diese benötigen in der Regel parallele Symmetrierungswiderstände zur statischen Spannungssymmetrierung, die bei hohen Zwischenkreisspannungen permanent Verluste verursachen. Zum anderen muss die dynamische Spannungssymmetrierung bei Schaltvorgängen gewährleistet werden, welches entweder Snubbernetzwerke oder intelligente und teure Treiberschaltungen oder Zusatzbeschaltungen notwendig macht. Wird der weichgeschaltete Bereich in einer DAB-Topologie aufgrund einer zu hohen Eingangsspannungsvariabilität oder einem zu großen Lastbereich verlassen, steigen die Snubberverluste stark an. Die Verluste in den Snubbern können dabei die Verluste der Halbleiter übersteigen. Als Snubbernetzwerk bezeichnet man eine elektrische Schaltung mit Snubbergliedern, die z.B. störende Hochfrequenzen oder Spannungsspitzen, die meist beim Schalten von induktiven Lasten auftreten, bei einer abrupten Unterbrechung des Stromflusses neutralisieren soll. Snubberglieder begrenzen die Spannungsanstiegsgeschwindigkeit oder die Stromanstiegsgeschwindigkeit an Halbleitern.

### Zusammenfassung der Erfindung

Es ist eine Aufgabe der vorliegenden Erfindung einen möglichst einfachen und verlustarmen bidirektionalen Gleichspannungswandler für hohe Spannungen zu Verfügung zu stellen.

### Diese Aufgabe wird gelöst durch einen bidirektionalen

Gleichspannungswandler mit einer Eingangsstufe zur Umwandlung einer DC-Eingangsspannung in eine erste AC-Spannung, einem Transformator zur Transformierung der ersten AC-Spannung in eine zweite AC-Spannung und einer Ausgangsstufe zur Umwandlung der zweiten AC-Spannung in eine DC-Ausgangsspannung, wobei mindestens eine der Eingangsstufen und/oder Ausgangsstufen zur Bereitstellung der ersten und/oder zweiten AC-Spannung einen Zweig eines Multilevel-Umrichters mit einer ersten Anzahl an aktiven ersten Halbleiterschaltern umfasst. Es ergibt sich eine Multilevel DAB. Hierbei sind die Eingangs- und Ausgangsstufen gegeneinander isoliert. Die Eingangsstufe in einem erfindungsgemäßen bidirektionalen Gleichspannungswandler kann gegebenenfalls in einem anderen erfindungsgemäßen bidirektionalen Gleichspannungswandler die Ausgangsstufe darstellen. Geeignete aktive Halbleiterschalter (Leistungshalbleiter) sind hierbei beispielsweise abschaltbare Thyristoren, Transistoren oder MOSFETs. Der Fachmann kann alternativ auch andere geeignete aktive Halbleiterschalter verwenden. Umrichter sind Vorrichtungen, die Spannungen beliebiger Polarität in andere Spannungen umwandeln. Der Wandlungsvorgang geschieht hier durch Leistungselektronik, wobei die elektrische Energie in einem sogenannten Zwischenkreis gespeichert wird. In diesen Zwischenkreis können beispielsweise auch noch zusätzliche Filter eingebaut werden. Die Ausgangsspannung des Multilevel-Umrichters setzt sich aus einer Vielzahl an Spannungszuständen (Level) zusammen. Bei einem Zweistufen-Umrichter (2-level-Umrichter) sind das zwei Spannungszustände, bei einem Dreistufen-Umrichter (3-level-Umrichter) sind dies drei Spannungszustände u.s.w. Der Begriff Multilevel-Umrichter umfasst hierbei alle geeigneten Multilevel-Umrichter, also beispielsweise 2-level-Umrichter, 3-level-Umrichter, 4-level-Umrichter, 5-level-Umrichter usw. Der erfindungsgemäße bidirektionale DC/DC-Wandler vermeidet dabei eine kostenintensive Serienschaltung von leistungselektronischen Halbleiterschaltern wie IGBTs ("insulated gate bipolar transistors") oder IGCTs ("Integrated Gate-Commutated Thyristor") mit intelligenten GATE-Treibern oder verlustreichen RC-Snubbergliedern und ermöglicht einen verlustarmen Betrieb. Bidirektionale Gleichspannungswandler gemäß der vorliegenden Erfindung können beispielsweise eingesetzt werden in der Leistungselektronik beispielsweise für DC-Netze, in Energiespeichersystemen, hier insbesondere Batterieenergiespeichersystemen, Windkraftanlagen oder für regenerative Energiesysteme als Spannungswandler, insbesondere als Spannungswandler mit hohem Spannungsübersetzungsverhältniss. Die Gestaltung der anderen Seite, also der Eingangsseite bei Anordnung des Multilevel-Umrichters in der Ausgangsseite oder die Ausgangsseite bei Anordnung des Multilevel-Umrichters in der Eingangsseite hängt von der vorgesehenen Anwendung für den bidirektionaler Gleichspannungswandler ab, beispielsweise zur Verlustminimierung für bestimmte Betriebspunkte oder bei Anforderungen an eine bestimmte Spannungsvariabilität.

In einer Ausführungsform ist der Multilevel-Umrichter ein 3-level Umrichter oder ein 5-level-Umrichter. Der 3-level Umrichter ist in der Lage, drei Spannungsstufen am Ausgang einzustellen. Dabei werden die Leistungshalbleiter maximal mit der halben Zwischenkreisspannung belastet. Um Spannungsungleichheiten zu verkleinern, werden hier im Gegensatz zu einer Halbbrücke jeweils zwei Halbleiterschalter in Reihe verwendet. Ohne weitere Maßnahmen ist die Spannungsaufteilung der Leistungshalbleiter allerdings unsymmetrisch. Die symmetrische Spannungsaufteilung der Leistungshalbleiter kann beispielsweise durch parallel zu den Leistungshalbleitern angeordnete Kapazitäten erreicht werden. Der 5-level Umrichter ist analog in der Lage, fünf Spannungsstufen am Ausgang einzustellen. In einer bevorzugten Ausführungsform ist der Multilevel-Umrichter ein 3-level NPC Umrichter mit zwei Clamping-Dioden. NPC steht hier für "neutral-point-clamped". Die Niveaus der drei Spannungsstufen können beim 3-level NPC Umrichter über die Clamping-Dioden symmetrisch eingestellt werden, so dass die Mittelspannung dem Spannungs-Nullniveau entspricht, ohne dass dafür Symmetrierungsnetzwerke und/oder Treiber erforderlich wären. In alternativen Ausführungsformen können anstatt der Clamping-Dioden IGBTs (Bipolartransistoren mit isolierter Gate-Elektrode) (ANPC-Umrichter) verwendet oder Kapazitäten in sogenannten FLCs zur Spannungsaufteilung eingesetzt werden, In einer Ausführungsform ist der Multilevel-Umrichter ein 3-level NPC Umrichter (51, 52) mit zwei IGBTs oder Kapazitäten anstatt der Clamping-Dioden. Alle voranstehenden Ausführungsformen können neben den 3-level Umrichtern auch in anderen Multilevel-Umrichtern mit einer anderen Anzahl an Level entsprechend verwendet werden. Neben der vereinfachten Topologie entsteht durch das Einführen des zusätzlichen Spannungslevels (im Vergleich zum 2-level Umrichter) ein weiterer Freiheitsgrad für die Modulation des Umrichters. Der zusätzliche Freiheitsgrad kann beispielsweise zu einer Minimierung der Gesamtverluste des Umrichters für einen Lastbereich benutzt werden. Bei einem großen Transformationsverhältnis zwischen Eingangsspannung und Ausgangsspannung ist es vorteilhaft, den 3-level NPC Umrichter auf der Seite mit der hohen Spannung anzuordnen. Bei einer Hochtransformation wäre dies die Ausgangsseite, bei einer Transformation zu niedrigen Spannungen wäre dies die Eingangsseite. Als Transformationsverhältnis wird hier das Verhältnis der Amplituden zwischen erster und zweiter AC-Spannung bezeichnet. Entsprechend ist die Seite der hohen Spannung entweder die Eingangsseite oder die Ausgangsseite.

In einer weiteren Ausführungsform umfasst die Ausgangsstufe zur Gleichrichtung der zweiten AC-Spannung eine H-Brücke oder Halbbrücke mit einer zweiten Anzahl an aktiven zweiten Halbleiterschaltern. Eine H-Brücke besteht dabei aus zwei Halbbrücken. Im Gegensatz zu unidirektionalen Gleichspannungswandlern benötigt der bidirektionale Gleichspannungswandler auch auf der Ausgangsseite steuerbare Halbleiterschalter. Das Prinzip eines DAB-Gleichspannungswandlers ist es, über die AC-Spannungen am Transformator einen gezielten Spannungsabfall über der Streuinduktivität des Transformators hervorzurufen und damit den Leistungsfluss zu steuern. Die Halbbrücke kann hier als Brückengleichrichter zur Umwandlung von Wechselstrom in Gleichstrom dienen, der dann am Ausgang bereitgestellt wird. Eine solche Halbbrücke ist eine bekannte, konventionelle und somit zuverlässige Komponente. Eine aktiv geschaltete Halbbrücke oder H-Brücke ermöglicht die unabhängige Steuerung des Verschiebungswinkels der am Transformator anliegenden Wechselspannungen und damit die gezielte Steuerung des Leistungsflusses. Die H-Brücke kann insbesondere in Ausgangstufen für niedrige Zwischenkreisspannungen, bei denen keine Serienschaltung von Halbleiterschaltern notwendig ist, verwendet werden. In einer bevorzugten Ausführungsform ist die H-Brücke eine 2-level H-Brücke.

In einer weiteren Ausführungsform ist die Anzahl erster und zweiter Halbleiterschalter gleich. Hiermit kann die zulässige Zwischenkreisspannung und der verwendbare Eingangsspannungsbereich verdoppelt werden. In einer Anordnung des bidirektionalen Gleichspannungsschalters mit einer 3-level NPC Umrichterstufe mit zwei Clamping-Dioden und einer 2-level H-Brücke bei gleicher Anzahl an Halbleiterschaltern kann über Anpassung der Spannungsamplituden das Spannungsverhältnis gleich 1 gesetzt werden, wodurch das verlustlose Einschalten über einen im Vergleich zu konventionellen DAB-Gleichspannungswandlern vergrößerten Lastbereich garantiert wird.

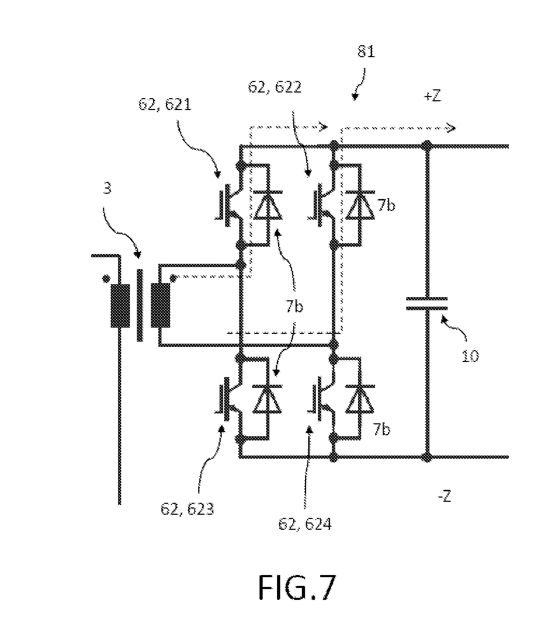

In einer Ausführungsform ist die Anzahl der zweiten Halbleiterschalter in der Halbbrücke vier, die zweiten Halbleiterschalter sind unabhängig voneinander schaltbar und der erste und der zweite der zweiten Halbleiterschalter sind auf eine positive Zwischenkreisschiene geschaltet, siehe dazu Figur 7. Dadurch wird der Transformatorstrom bei kleinen Leistungen minimiert. Bei DC/DC Wandlern spricht man auch von der Minimierung der Blindleistung. Die positive Zwischenkreisschiene bezeichnet dabei das obere Potential des Kondensators. Indem die ersten und zweiten Halbleiterschalter parallel betrieben werden, wird der Transformator kurzgeschlossen und in der Halbbrücke ein drittes Spannungsniveau, das Nullniveau, erzeugt. Insofern kann eine 2-level Halbbrücke bei entsprechender Ansteuerung der zweiten Halbleiterschalter auch als 3-level Halbbrücke betrieben werden. Hiermit kann die Blindleistung des Umrichters minimiert werden. Dies kann alternativ auch dadurch erreicht werden, dass der dritte und der vierte der zweiten Halbleiterschalter auf eine negative Zwischenkreisschiene geschaltet sind. Die negative Zwischenkreisschiene bezeichnet entsprechend das untere Potential des Kondensators. Für die Minimierung der Blindleistung ist hier eine unabhängige Triggerung der diagonalen zweiten Halbleiterschalter (der erste und der vierte bzw. der zweite und der dritte der zweiten Halbleiterschalter) notwendig.

In einer weiteren Ausführungsform umfasst auch die Ausgangsstufe zur Gleichrichtung der zweiten AC-Spannung einen Zweig eines zweiten Multilevel-Umrichters. Der Begriff Multilevel-Umrichter umfasst hierbei alle geeigneten Multilevel-Umrichter, also beispielsweise 2-level-Umrichter, 3-level-Umrichter, 4-level-Umrichter, 5-level-Umrichter usw. In einer Ausführungsform ist der zweite Multilevel-Umrichter ein 3-level Umrichter oder ein 5-level Umrichter. Vorzugsweise ist der zweite Multilevel-Umrichter ein 3-level NPC Umrichter mit zwei Clamping-Dioden.

In einer weiteren Ausführungsform ist die DC-Eingangsspannung variabel und die Spannungsamplitude der Eingangsspannung ist an die Amplitude der Ausgangsspannung angepasst. Das Spannungsverhältnis ist damit gleich 1, womit das verlustlose Einschalten für nahezu den gesamten Lastbereich garantiert werden kann. Im Vergleich zum 2-level DAB-Gleichspannungswandler besitzt der vorgestellte Wandler pro hinzugefügtem Spannungslevel einen weiteren Freiheitsgrad in der Modulation. Beispielsweise durch den zusätzlichen Freiheitsgrad des 3. Levels bei der 3-level Ausführung bzw. die zusätzlichen Freiheitsgrade der 5 Level bei der 5-level Ausführung etc. kann man die Gesamtverluste des Umrichters inklusive Transformator etc. minimieren. Das ZVS-Einschalten (Nullspannungsschalten) und das Schalten bei minimalem Strom kann dadurch auch beeinflusst werden. Der Lastbereich für ein verlustloses Einschalten ist im Vergleich zu konventionellen DAB-Gleichspannungswandlern auch für Spannungsübersetzungsverhältnisse ungleich 1 vergrößert.

In einer weiteren Ausführungsform ist die Topologie des bidirektionalen Gleichspannungswandlers auf drei oder mehr Phasen erweitert. Dadurch erschließt sich dem erfindungsgemäßen bidirektionalen Gleichspannungswandler ein größeres Einsatzfeld für höhere Leistungen.

Der erfindungsgemäße bidirektionale Gleichspannungswandler kann verschiedene Multilevel-Multilevel-Verhältnisse besitzen. Beispielsweise kann der erfindungsgemäße bidirektionale Gleichspannungswandler ein bidirektionaler 3-level / 2-level DC-DC-Wandler sein. In anderen Ausführungsformen kann der erfindungsgemäße bidirektionale Gleichspannungswandler auch ein 5-level / 2-level DC-DC-Wandler oder ein 5-level /3-level DC-DC-Wandler oder ein 3-level / 3-level Wandler sein. Fachleute können auch andere Multilevel-Multilevel-Kombinationen im Rahmen der vorliegenden Erfindung in Abhängigkeit vom gewünschten Anwendungsgebiet wählen.

### Kurzbeschreibung der Zeichnungen

Diese und andere Aspekte der vorliegenden Erfindung sind in den Zeichnungen im Detail dargestellt.
- Fig.1:: mehrere Ausführungsformen des bidirektionalen Gleichspannungswandlers mit mindestens einem Multilevel-Umrichter in Eingangs- und/oder Ausgangstufe;
- Fig.2:: ein bidirektionaler Gleichspannungswandler gemäß vorliegender Erfindung mit einem 3-level NPC Umrichter in der Eingangsstufe und einer 2-level Halbbrücke in der Ausgangsstufe;
- Fig.3:: simulierte Verläufe für erste und zweite AC-Spannungen sowie für die entsprechenden Ströme am Transformator für einen bidirektionalen Gleichspannungswandler gemäß Figur 2 für einen ersten Operationsmodus;
- Fig.4:: Stromverläufe der Eingangs- und Ausgangsstufe eines erfindungsgemäßen bidirektionalen Gleichspannungswandlers gemäß Figur 2 für den ersten Operationsmodus;
- Fig.5:: Verläufe für erste und zweite AC-Spannungen sowie für die entsprechenden Ströme am Transformator für einen bidirektionalen Gleichspannungswandler gemäß Figur 2 für einen zweiten Operationsmodus;

- Fig.6:: Stromverläufe in den Zwischenkreisen der Eingans- und Ausgangsstufe eines erfindungsgemäßen bidirektionalen Gleichspannungswandlers gemäß Figur 2 für den zweiten Operationsmodus;
- Fig.7:: Ausgangsstufe als 3-level Halbbrücke;
- Fig.8:: ein alternativer bidirektionaler Gleichspannungswandler gemäß vorliegender Erfindung mit zwei 3-level NPC Umrichtern als Eingangs- und Ausgangsstufe.

### Detaillierte Beschreibung von Ausführungsformen

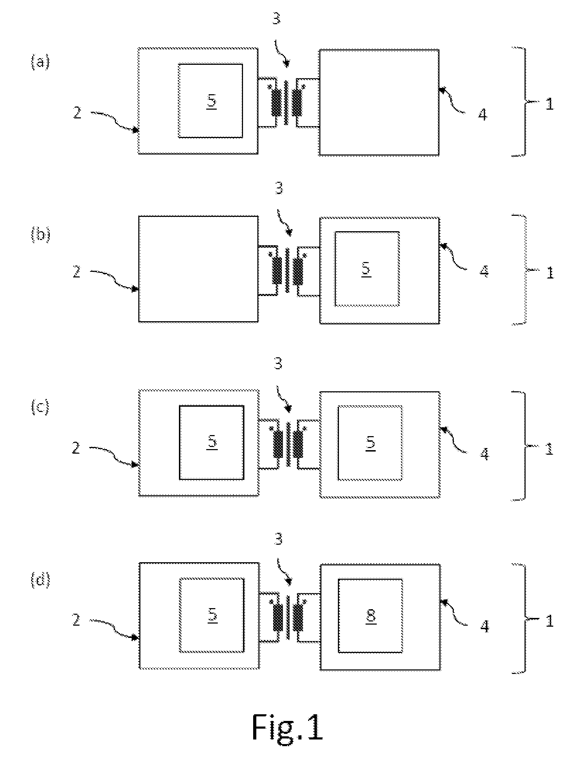

Figur 1 zeigt mehrere Ausführungsformen (a) - (d) des bidirektionalen Gleichspannungswandlers 1 mit jeweils einer Eingangsstufe 2 zur Umwandlung einer DC-Eingangsspannung in eine erste AC-Spannung, einem Transformator 3 zur Transformierung der ersten AC-Spannung in eine zweite AC-Spannung und einer Ausgangsstufe 4 zur Umwandlung der zweiten AC-Spannung in eine DC-Ausgangsspannung. Die verschiedenen Ausführungsformen (a) - (d) umfassen mindestens einen Multilevel-Umrichter 5 in Eingangsstufe 2 und/oder Ausgangstufe 4. In Ausführungsform (a) ist der Multilevel-Umrichter 5 in der Eingangsstufe 2 angeordnet. In Ausführungsform (b) ist der Multilevel-Umrichter 5 in der Ausgangsstufe 4 angeordnet. In Ausführungsform (c) ist jeweils ein Multilevel-Umrichter 5 in der Eingangsstufe 2 und in der Ausgangsstufe 4 angeordnet. In Ausführungsform (d) ist der Multilevel-Umrichter 5 in der Eingangsstufe 2 angeordnet, während die Ausgangsstufe 8 eine Halbbrücke oder H-Brücke umfasst.

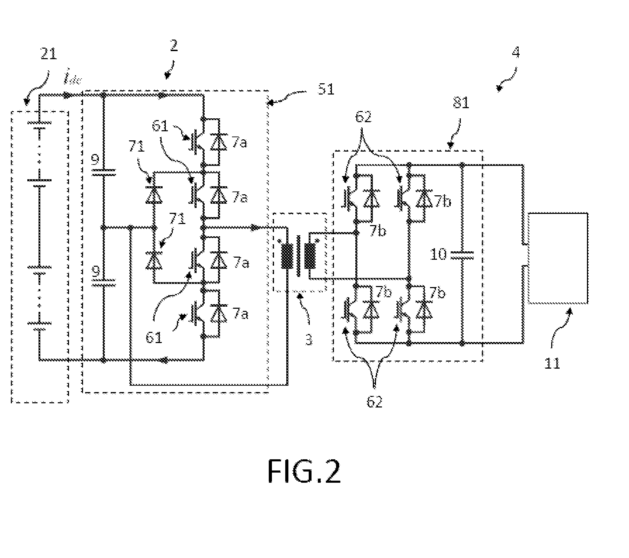

Figur 2 zeigt einen bidirektionaler Gleichspannungswandler gemäß vorliegender Erfindung mit einem 3-level NPC Umrichter 51 in der Eingangsstufe und einer 2-level H-Brücke 81 in der Ausgangsstufe 4. An der Eingangsstufe liegt eine DC-Eingangsspannung 21 an, die Ausgangsstufe 4 speist eine Last 11. Zwischen Eingangs- und Ausgangsstufe 2,4 wird die Ausgangsspannung der Eingangsstufe 2 mittels eines Transformators 3 in eine Eingangsspannung der Ausgangsstufe 4 transformiert. Der 3-level NPC Umrichter 51 umfasst hierbei zwei obere und zwei untere erste Halbleiterschalter 61 mit jeweils einer parallel dazu angeordneten Diode 7a, zwei Clamping-Dioden 71 und zwei Kondensatoren 9. Geeignete aktive erste Halbleiterschalter 61 (Leistungshalbleiter) sind hierbei beispielsweise MOFFETs, IGBTs oder IGCTs. Die Komponenten des 3-level NPC Umrichter 51 bilden einen Zwischenkreis, in dem die elektrische Energie für den Wandlungsvorgang gespeichert wird. In diesem Zwischenkreis können in anderen Ausführungsformen noch zusätzliche Filter, beispielsweise Frequenzfilter eingebaut werden. Die vom Multilevel-Umrichter 51 an den Transformator 3 zur Transformierung übertragene erste AC-Spannung setzt sich aus einer Vielzahl an Spannungszuständen (Level) zusammen. Wie bei konventionellen DAB-Gleichspannungswandlern wird die Streuinduktivität des Transformators, und, falls diese nicht ausreicht, eine zusätzliche Induktivität dazu in Serie benutzt, um die Leistung zwischen -Pₘₐₓ, 0 und +Pₘₐₓ steuern zu können, wobei Pₘₐₓ die maximal übertragbare Leistung bezeichnet. Die Ausgangsstufe 4 umfasst in dieser Ausführungsform zur Gleichrichtung der aus der ersten AC-Spannung transformierten zweiten AC-Spannung eine 2-level Halbbrücke 81 mit vier aktiven zweiten Halbleiterschaltern 62 mit jeweils einer parallel dazu angeordneten Diode 7b , so dass die Anzahl der Halbleiterschalter 61, 62 in den Eingangs- und Ausgangsstufen 2, 4 gleich ist. Der Kondensator 10 dient zur Glättung der gleichgerichteten Ausgangsspannung.

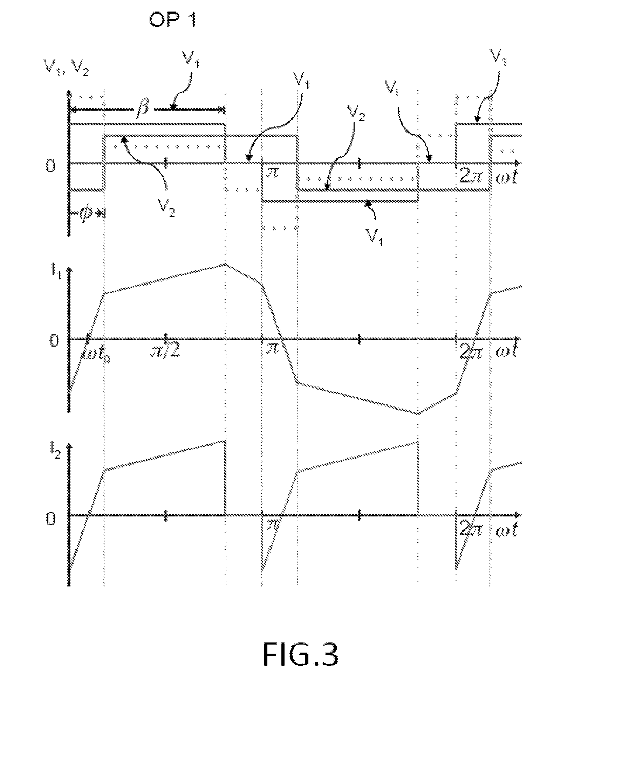

Figur 3 zeigt Verläufe als Funktion von ωt für eine erste AC-Spannung V₁(Eingangsspannung am Transformator) und eine zweite AC-Spannungen V₂ (Ausgangsspannung) am Transformator sowie für die entsprechenden Ströme I₁ am Transformator 3 für einen bidirektionalen Gleichspannungswandler 1 und I₂ am Zwischenkreis gemäß Figur 2 im Falle eines ersten Operationsmodus OP1, bei dem die Eingangsspannung V₁ größer als die Ausgangsspannung V₂ ist, wobei für den Phasenverschiebungswinkel φ zwischen erster und zweiter AC-Spannung V₁ und V₂ gilt: 0 < φ ≤ β/2. In der Darstellung von V₁ und V₂ über ωt sind bei V₁ die drei Spannungslevel +V₁, 0, -V₁, die der 3-level NPC Umrichters bereitstellt, sowie die beiden Spannungslevel +V₂, -V₂ ersichtlich, die nach Transformation über die 2-level Halbbrücke gleichgerichtet werden. Die maximale Energieübertragung wird bei einem Phasenverschiebungswinkel φ = β/2 erreicht, bei φ = 0 ist diese für den Operationsmodus 1 minimal. Für φ > β/2 wird die Energieübertragung ebenfalls wieder geringer, die Blindleistung steigt jedoch an.

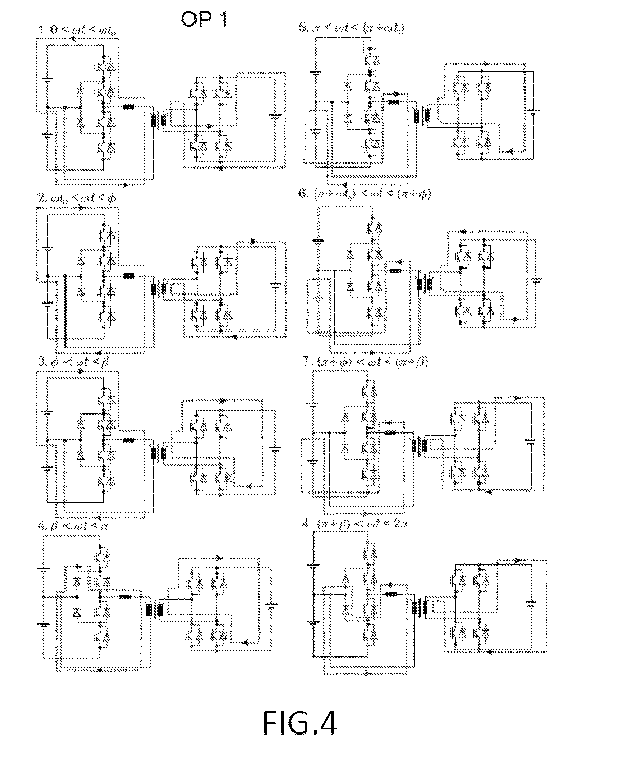

Figur 4 zeigt die der Figur 3 (erster Operationsmodus OP1) entsprechenden Stromverläufe (gestrichelte Kreise mit Stromflussrichtung dargestellt als Pfeil) in der Topologie der Zwischenkreise der Eingangs- und Ausgangsstufe eines erfindungsgemäßen bidirektionalen Gleichspannungswandlers gemäß Figur 2 mit V1 ≥ V₂ und 0 < φ ≤ β/2 für den Gesamtbereich 0 < ωt < 2Π. Figur 4 umfasst acht Darstellungen, bei denen die unterschiedlichen Stromverläufe für die acht Intervalle im Bereiche 0 < ωt < 2Π gezeigt sind: (1) 0 < ωt < ωt₀, (2) ωt₀ < ωt < φ, (3) φ < ωt < β, (4) β < ωt < Π, (5) Π < ωt < (Π + ωt₀), (6) (Π + ωt₀) < ωt < (Π + φ), (7) (Π + φ) < ωt < (Π + β), und (8) (Π + β) < ωt < 2Π. Die Kreise um die ersten und zweiten Halbleiterschalter in den Darstellungen (1) und (4) bezeichnen die Schalter, die spannungslos eingeschaltet werden können, da noch ein Stromfluss in der antiparallelen Diode vorliegt.

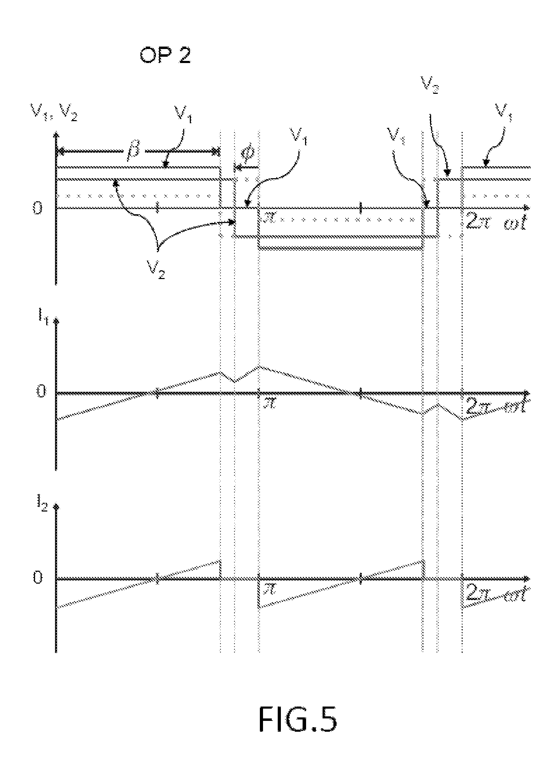

Für einen bidirektionalen Betrieb des erfindungsgemäßen Gleichspannungswandlers 1 kann die 3-level / 2-level DAB-Anordnung aus Figur 2 in einem zweiten Operationsmodus OP2 mit einem negativen Phasenverschiebungswinkel φ < 0 betrieben werden. Figur 5 zeigt für den Operationsmodus 2 mit - π + β ≤ Φ < 0 simulierte Verläufe für die erste AC-Spannung V₁ und zweite AC-Spannungen V₂ sowie für die entsprechenden Ströme I₁ am Transformator 3 für einen bidirektionalen Gleichspannungswandler 1 und I₂ am Zwischenkreis. Aus Symmetriegründen ist der transformierte Strom für eine volle Periode durch eine Periode von π vollständig charakterisiert. In der Darstellung von V₁ und V₂ über ωt sind bei V₁ die drei Spannungslevel +V₁, 0, -V₁, die der 3-level NPC Umrichter bereitstellt, sowie die beiden Spannungslevel +V₂, -V₂ ersichtlich, die nach Transformation über die 2-level Halbbrücke gleichgerichtet werden. Die Energieübertragung wird Null bei einem Phasenverschiebungswinkel φ = (-π + β)/2. Die maximale Energieübertragung in diesem Operationsmodus wird bei einem Phasenverschiebungswinkel φ = 0 erreicht.

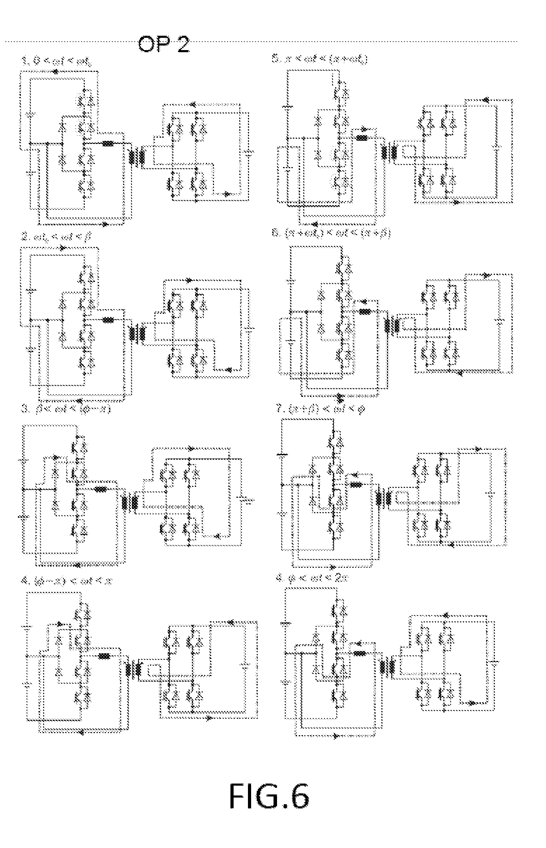

Figur 6 zeigt die der Figur 5 (zweiter Operationsmodus OP2) entsprechenden Stromverläufe (gestrichelte Kreise mit Stromflussrichtung dargestellt als Pfeil) in der Topologie der Zwischenkreise der Eingangs- und Ausgangsstufe eines erfindungsgemäßen bidirektionalen Gleichspannungswandlers gemäß Figur 2 mit V₁ ≥ V₂ und - π + β ≤ Φ < 0 für den Gesamtbereich 0 < ωt < 2π. Figur 4 umfasst acht Darstellungen, bei denen die unterschiedlichen Stromverläufe für die acht Intervalle im Bereiche 0 < ωt < 2π gezeigt sind: (1) 0 < ωt < ωt₀, (2) ωt₀ < ωt < β, (3) β < ωt < (φ - π), (4) (φ - π) < ωt < π, (5) π < ωt < (π + ωt₀), (6) (π + ωt₀) < ωt < (π + β), (7) (π + β) < ωt < φ, und (8) φ < ωt < 2π. Die Kreise um die ersten und zweiten Halbleiterschalter in den Darstellungen (1) und (4) bezeichnen die Schalter, die spannungslos eingeschaltet werden können, da noch ein Stromfluss in der antiparallelen Diode vorliegt..

Figur 7 zeigt die H-Brücke 81 als Ausgangsstufe des erfindungsgemäßen bidirektionalen Gleichspannungswandlers aus Figur 2 als vergrößerter Ausschnitt. Hier sind die zweiten Halbleiterschalter 62 unabhängig voneinander schaltbar und der erste 621 und der zweite 622 der zweiten Halbleiterschalter 62 sind auf eine positive Zwischenkreisschiene +Z geschaltet. Dadurch wird der Transformatorstrom bei kleinen Leistungen minimiert. Der Zwischenkreis besteht hier aus der H-Brücke und einem Kondensator 10 parallel zur Brücke. Die positive Zwischenkreisschiene +Z bezeichnet dabei das obere Potential des Kondensators 10. Indem die ersten 621 und zweiten Halbleiterschalter 622 parallel betrieben werden, wird der Transformator 3 kurzgeschlossen (angedeutet durch die gestrichelten Pfeile) und in der Halbbrücke 81 ein drittes Spannungsniveau, das Nullniveau, erzeugt. Insofern kann eine 2-level Halbbrücke 81 bei entsprechender Ansteuerung der zweiten Halbleiterschalter 62 auch als 3-level Halbbrücke betrieben werden. Hiermit kann die Blindleistung des Umrichters minimiert werden. Dies kann alternativ auch dadurch erreicht werden, dass der dritte 623 und der vierte 624 der zweiten Halbleiterschalter 62 auf eine negative Zwischenkreisschiene -Z geschaltet sind. Die negative Zwischenkreisschiene - Z bezeichnet entsprechend das untere Potential des Kondensators 10. Für die Minimierung der Blindleistung ist hier eine unabhängige Triggerung der diagonalen zweiten Halbleiterschalter (der erste 621 und der vierte 624 bzw. der zweite 622 und der dritte 623 der zweiten Halbleiterschalter 62) notwendig.

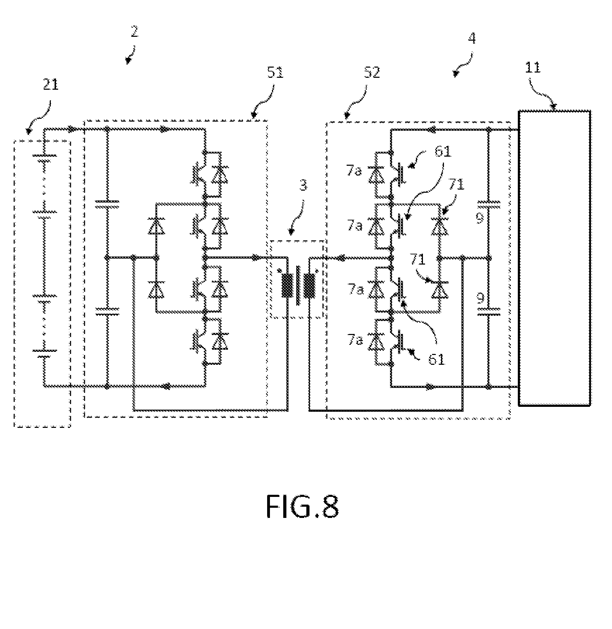

Figur 8 zeigt einen alternativen bidirektionalen Gleichspannungswandler 1 gemäß vorliegender Erfindung mit zwei 3-level NPC Umrichtern als Eingangs-und Ausgangsstufe 2,4. Die Eingangseite 2 entspricht der Eingangsseite 2 aus Figur 2, für die Details der Eingangsstufe 2 wird daher auf die Beschreibung zu

Figur 2 verwiesen. Die Ausgangsstufe 4 umfasst einen zweiten 3-level NPC Umrichters 52, der ebenso zwei obere und zwei untere erste Halbleiterschalter 61 mit jeweils einer parallel dazu angeordneten Diode 7a, zwei Clamping-Dioden 71 und zwei Kondensatoren 9 umfasst. Geeignete aktive erste Halbleiterschalter 61 (Leistungshalbleiter) sind hierbei beispielsweise MOSFETs, IGBTs oder IGCTs. Die Komponenten des zweiten 3-level NPC Umrichter 52 bilden ebenfalls einen Zwischenkreis, in dem die elektrische Energie für den Wandlungsvorgang gespeichert wird. In diesem Zwischenkreis können in anderen Ausführungsformen noch zusätzliche Filter eingebaut werden.

### Die detaillierte Darstellung der Erfindung in diesem Abschnitt und in den

Figuren ist als Beispiel für mögliche Ausführungsformen im Rahmen der Erfindung und daher nicht einschränkend zu verstehen. Insbesondere angegebene Größen sind auf die jeweiligen Betriebsbedingungen des Schalters (Strom, Spannung) vom Fachmann anzupassen. Daher sind alle angegebenen Größen nur als Beispiele für bestimmte Ausführungsformen zu verstehen.

Alternative Ausführungsformen, die der Fachmann möglicherweise im Rahmen der vorliegenden Erfindung in Betracht zieht, sind vom Schutzbereich der vorliegenden Erfindung ebenfalls mit umfasst. In den Ansprüchen umfassen Ausdrücke wie "ein" auch die Mehrzahl. In den Ansprüchen angegebene Bezugszeichen sind nicht einschränkend auszulegen.

### Bezugszeichenliste

- 1: bidirektionaler Gleichspannungswandler
- 2: Eingangsstufe
- 21: DC-Eingangsspannungsversorgung
- 3: Transformator
- 4: Ausgangsstufe
- 5: Multilevel-Umrichter
- 51: 3-level NPC Umrichter in der Eingangsstufe
- 52: 3-level NPC Umrichter in der Ausgangsstufe
- 61: erste Halbleiterschalter
- 62: zweite Halbleiterschalter
- 621: erster der zweiten Halbleiterschalter
- 622: zweiter der zweiten Halbleiterschalter
- 623: dritter der zweiten Halbleiterschalter
- 624: vierter der zweiten Halbleiterschalter
- 7a: Gleichrichterdioden des ;Multilevel-Umrichters
- 7b: Gleichrichterdioden der Halbbrücke
- 71: Clamping-Dioden des Multilevel-Umrichters, hier ein 3-level NPC Umrichter
- 8: H-Brücke oder Halbbrücke
- 81: 2-level H-Brücke oder 2-level Halbbrücke
- 9: Zwischenkreiskondensator
- 10: Kondensator zur Glättung des Ausgangsspannung
- 11: Last
- OP1: ersten Operationsmodus
- OP2: zweiter Operationsmodus
- V_{1,} I₁: Spannung / Strom der ersten AC-Spannung
- V₂, I₂: Spannung / Strom der zweiten AC-Spannung
- +Z, -Z: positive / negative Zwischenkreisschiene der Halbbrücke

## Patentansprüche

1. Ein bidirektionaler Gleichspannungswandler (1) mit einer Eingangsstufe (2) zur Umwandlung einer DC-Eingangsspannung in eine erste AC-Spannung, einem Transformator (3) zur Transformierung der ersten AC-Spannung in eine zweite AC-Spannung und einer Ausgangsstufe (4) zur Umwandlung der zweiten AC-Spannung in eine DC-Ausgangsspannung, wobei mindestens eine der Eingangsstufen (2) und/oder Ausgangsstufen (4) zur Bereitstellung der ersten und/oder zweiten AC-Spannung einen Zweig eines Multilevel-Umrichters (5) mit einer ersten Anzahl an aktiven ersten Halbleiterschaltern (61) umfasst.

2. Der bidirektionale Gleichspannungswandler (1) nach Anspruch 1,
**dadurch gekennzeichnet,**
**dass** der Multilevel-Umrichter (5) ein 3-level Umrichter oder ein 5-level Umrichter ist.

3. Der bidirektionale Gleichspannungswandler (1) nach Anspruch 1 oder 2, **dadurch gekennzeichnet,**
der Multilevel-Umrichter ein 3-level NPC Umrichter (51, 52) mit zwei Clamping-Dioden (71) ist.

4. Der bidirektionale Gleichspannungswandler (1) nach Anspruch 1 oder 2, **dadurch gekennzeichnet,**
der Multilevel-Umrichter ein 3-level NPC Umrichter (51, 52) mit zwei IGBTs oder Kapazitäten ist.

5. Der bidirektionale Gleichspannungswandler (1) nach Anspruch 3 oder 4, **dadurch gekennzeichnet,**
der 3-level NPC Umrichter (51, 52) bei einem großen Transformationsverhältnis auf der Seite der Eingangs- oder Ausgangsstufe (2, 4) angeordnet ist, auf der die höhere Spannung anliegt.

6. Der bidirektionale Gleichspannungswandler (1) nach einem der voranstehenden Ansprüche,
**dadurch gekennzeichnet,**
**dass** die Ausgangsstufe (4) zur Gleichrichtung der zweiten AC-Spannung eine H-Brücke oder Halbbrücke (8) mit einer zweiten Anzahl an aktiven zweiten Halbleiterschaltern (62) umfasst.

7. Der bidirektionale Gleichspannungswandler (1) nach Anspruch 6,
**dadurch gekennzeichnet,**
die H-Brücke (8) eine 2-level H-Brücke (81) ist.

8. Der bidirektionale Gleichspannungswandler (1) nach Anspruch 6 oder 7, **dadurch gekennzeichnet,**
**dass** die Anzahl erster und zweiter Halbleiterschalter (61, 62) gleich ist.

9. Der bidirektionale Gleichspannungswandler (1) nach einem der Ansprüche 6 bis 8,
**dadurch gekennzeichnet,**
**dass** die Anzahl der zweiten Halbleiterschalter (62) vier ist, die zweiten Halbleiterschalter unabhängig voneinander schaltbar sind und der erste (621) und der zweite (622) der zweiten Halbleiterschalter (62) auf eine positive Zwischenkreisschiene geschaltet sind.

10. Der bidirektionale Gleichspannungswandler nach einem der Ansprüche 6 bis 8,
**dadurch gekennzeichnet,**
**dass** die Anzahl der zweiten Halbleiterschalter (62) vier ist, die zweiten Halbleiterschalter unabhängig voneinander schaltbar sind und der dritte (623) und der vierte (624) der zweiten Halbleiterschalter (62) auf eine negative Zwischenkreisschiene geschaltet sind.

11. Der bidirektionale Gleichspannungswandler (1) nach Anspruch 1 oder 2, **dadurch gekennzeichnet,**
**dass** die Ausgangsstufe (4) zur Gleichrichtung der zweiten AC-Spannung einen Zweig eines zweiten Multilevel-Umrichters (5) umfasst.

12. Der bidirektionale Gleichspannungswandler (1) nach Anspruch 11,
**dadurch gekennzeichnet,**
**dass** der zweite Multilevel-Umrichter (5) ein 3-level Umrichter oder ein 5-level Umrichter ist.

13. Der bidirektionale Gleichspannungswandler (1) nach Anspruch 12,
**dadurch gekennzeichnet,**
**dass** der zweite Multilevel-Umrichter ein 3-level NPC Umrichter (52) mit zwei Clamping-Dioden (71) ist.

14. Der bidirektionale Gleichspannungswandler (1) nach einem der voranstehenden Ansprüche,
**dadurch gekennzeichnet,**
**dass** die DC-Eingangsspannung (21) variabel ist und die Spannungsamplitude der Eingangsspannung (21) an die Amplitude der Ausgangsspannung angepasst ist.

15. Der bidirektionale Gleichspannungswandler (1) nach einem der voranstehenden Ansprüche,
**dadurch gekennzeichnet,**
**dass** die Topologie des bidirektionalen Gleichspannungswandlers (1) auf drei oder mehr Phasen erweitert ist.
